(19)

Europäisches Patentamt
European Patent Office
Office européen des brevets

(11) **EP 3 305 463 A1**

(12) **EUROPEAN PATENT APPLICATION**
published in accordance with Art. 153(4) EPC

(43) Date of publication:
**11.04.2018 Bulletin 2018/15**

(21) Application number: **16803462.7**

(22) Date of filing: **02.06.2016**

(51) Int Cl.:
**B23K 35/30** (2006.01)        **B23K 35/368** (2006.01)

(86) International application number:
**PCT/JP2016/066442**

(87) International publication number:
**WO 2016/195028 (08.12.2016 Gazette 2016/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.06.2015 JP 2015115277**
**09.02.2016 JP 2016023186**

(71) Applicant: **Kabushiki Kaisha Kobe Seiko Sho (Kobe Steel, Ltd.)**
**Kobe-shi, Hyogo 651-8585 (JP)**

(72) Inventors:
• **OKAZAKI Yoshitomi**
**Kobe-shi,**
**Hyogo 651-2271 (JP)**

• **KAWASAKI Hiroyuki**
**Kanagawa 251-8551 (JP)**
• **HAN Peng**
**Kanagawa 251-8551 (JP)**
• **SASAKURA Shuji**
**Kanagawa 251-8551 (JP)**
• **KITAGAWA Yoshihiko**
**Kanagawa 251-8551 (JP)**
• **TAKAWA Mana**
**Kanagawa 251-8551 (JP)**

(74) Representative: **Müller-Boré & Partner**
**Patentanwälte PartG mbB**
**Friedenheimer Brücke 21**
**80639 München (DE)**

(54) **WELDED METAL AND WELDED STRUCTURE**

(57)    This welded metal contains C, Si, Mn, Ni, Cr, Mo, Ti, B, O, N and Nb + V in specific amounts, respectively, with the balance being made up of Fe and unavoidable impurities. In this welded metal, carbides having circle-equivalent diameters of less than 0.40 $\mu$m have an average circle-equivalent diameter of 0.10 $\mu$m or more, and intergranular carbides having circle-equivalent diameters of 0.40 $\mu$m or more have an average circle-equivalent diameter of 0.75 $\mu$m or less.

EP 3 305 463 A1

Printed by Jouve, 75001 PARIS (FR)

**Description**

Technical Field

The present invention relates to a weld metal and a welded structure.

Background Art

Enlargement of equipment size is proceeding in marine structures (petroleum platforms) constructed for submarine oil-field drilling and oil production, and oil fields are being developed increasingly in cold districts. Steel plates and welding materials for application to such marine structures are hence required to have both strength and low-temperature toughness on a high level. Weld metal parts of welded structures among the marine structures are subjected, after the welding, to long-term annealing for stress removal (stress relief annealing; hereinafter referred to as SR annealing). It has, however, been pointed out that there are cases where the weld metal parts are deteriorated in strength and toughness by the SR annealing. There is hence a desire for a technique for producing a weld metal which can sufficiently retain high strength and toughness at -60°C after SR annealing.

Meanwhile, various welding methods have been applied in order to construct a welded structure, and application of gas-shielded arc welding using a flux-cored wire (FCW) as a welding material is thought to be preferred from the standpoint that this welding has excellent operation efficiency. Because of this, various techniques of gas-shielded arc welding using a flux-cored wire in which attention is directed to the strength and low-temperature toughness of the weld metal have been proposed.

For example, a wire for TIG welding for stress-relief heat treatment of high-tensile-strength steels has been proposed, the wire containing C (carbon), Si (silicon), Mn (manganese), Mo (molybdenum), Ti (titanium), Ni (nickel), A1 (aluminum), and O (oxygen) in specific amounts (see JP-A-2006-239733). According to this document, a weld metal having high strength, unsusceptibility to SR embrittlement, and high toughness is obtained by the wire for TIG welding. However, this weld metal has a toughness evaluation temperature of -29°C, which is slightly high, and toughness at a lower temperature of -60°C is not ensured.

A flux-cored wire containing a specific amount of a slag material having a specific composition and further containing specific amounts of C (carbon), Si (silicon), Mn (manganese), Ni (nickel), Cr (chromium), Mo (molybdenum), Cu (copper), Mg (magnesium), Ti (titanium), and B (boron) has also been proposed (see JP-A-H09-253886). According to this document, a weld metal satisfactory in terms of room temperature strength, high-temperature strength, and low-temperature toughness can be obtained by the flux-filled wire. However, this weld metal has a toughness evaluation temperature of -30°C, which is slightly high, and toughness at a lower temperature of - 60°C is not ensured.

Furthermore, a weld metal which contains C (carbon), Si (silicon), Mn (manganese), Ni (nickel), Cr (chromium), Mo (molybdenum), Ti (titanium), B (boron), O (oxygen), and N (nitrogen) in specific amounts and in which carbides present at grain boundaries have an average equivalent circular diameter in a specific range has been proposed (see JP-A-2014-195832). According to this document, a weld metal which exhibits high strength and excellent low-temperature toughness after SR annealing can be rendered possible, by controlling the chemical composition of the weld metal and regulating the carbides formed at the grain boundaries of the weld metal during the welding and each having a given size (hereinafter, these carbides are referred to also as "grain-boundary carbides") so as to have a specified average equivalent circular diameter. However, this weld metal has a toughness evaluation temperature of -40°C, and toughness at a lower temperature of -60°C is not ensured.

Prior Art Documents

Patent Documents

Patent Document 1: JP-A-2006-239733

Patent Document 2: JP-A-H09-253886

Patent Document 3: JP-A-2014-195832

Summary of the Invention

Technical Problems

The present invention has been made under the circumstances described above. An object of the present invention is to provide: a weld metal formed by gas-shielded arc welding with a flux-cored wire, the weld metal having high strength and have high toughness at -60°C or less after SR annealing; and a welded structure.

Solution to Problems

The present inventors diligently made investigations, and as a result, they have found that, in a case where fine carbides formed during welding are present in the grains of a weld metal, the weld metal has unstable low-temperature toughness. The present inventors have found, on the basis of the finding, that a weld metal which, after SR annealing, exhibits high strength and excellent low-temperature toughness can be rendered possible by controlling the chemical composition of the weld metal and controlling the sizes of carbides formed in the weld metal during the welding. More specifically, the present inventors have found that it is effective to add Mo, which serves to inhibit grain-boundary carbides from enlarging and to inhibit softening due to annealing, to a weld metal and to control the chemical composition. The present inventors have further found that it is effective to regulate the sizes of the grain-boundary carbides so as to fall within a given range by controlling the chemical composition including Mo and to regulate carbides formed in portions other than the grain boundaries so as to have sizes within a given range. A weld metal has a structure made up of a large number of aggregated regions which differ in arrangement orientation and are called "grains", and the term "grain boundaries" means the boundaries of these grains. Namely, that term means large-angle grain boundaries including not only ferrite grain boundaries but also prior austenite grain boundaries, block boundaries, packet boundaries, etc. In addition, the expression "in the grains" means all the regions including the grain boundaries of the grains.

That is, the present invention for solving the problem(s) is directed to a weld metal having a composition including: C (carbon): 0.02 mass% or more and 0.08 mass% or less; Si (silicon): 0.10 mass% or more and 0.30 mass% or less; Mn (manganese): 1.20 mass% or more and 2.0 mass% or less; Ni (nickel): 0.50 mass% or more and 3.00 mass% or less; Cr (chromium): 0 mass% or more and 0.70 mass% or less; Mo (molybdenum): 0.10 mass% or more and 0.70 mass% or less; Ti (titanium): 0.04 mass% or more and 0.08 mass% or less; B (boron): 0.0010 mass% or more and 0.0050 mass% or less; O (oxygen): 0.030 mass% or more and 0.100 mass% or less; N (nitrogen): more than 0 mass% and 0.015 mass% or less; Nb (niobium) + V (vanadium): 0.008 mass% or more and 0.05 mass% or less; and the remainder being Fe and unavoidable impurities, wherein an average equivalent circular diameter of carbides each having an equivalent circular diameter of less than 0.40 $\mu$m is 0.10 $\mu$m or more, and an average equivalent circular diameter of carbides present at grain boundaries and each having an equivalent circular diameter of 0.40 $\mu$m or more is 0.75 $\mu$m or less.

Since the weld metal has component contents within the ranges shown above, the weld metal attains high strength and toughness. Namely, since the weld metal contains Mo, which serves to inhibit softening due to annealing, in the amount shown above, high strength is obtained. Furthermore, since the weld metal contains Mo in the amount and contains Nb and V in the total amount shown above, grain-boundary carbides can be inhibited from enlarging. In the weld metal, since grain-boundary carbides each having an equivalent circular diameter of 0.40 $\mu$m or more have an average equivalent circular diameter of 0.75 $\mu$m or less because of, for example, the effect of inhibiting the enlargement of grain-boundary carbides, cracks are less apt to generate from coarse grain-boundary carbides as starting points and the toughness decrease due to SR annealing is inhibited. In addition, since the carbides present in the grains of the weld metal and each having an equivalent circular diameter of less than 0.40 $\mu$m have an average equivalent circular diameter of 0.10 $\mu$m or more, stable low-temperature toughness is attained and high toughness at -60°C or less is obtained. The term "equivalent circular diameter" means the diameter of a complete circle having the same area as a carbide grain observed in a section examined with a transmission electron microscope (TEM) or the like.

It is desirable that the weld metal should further contain at least one component selected from the group consisting of: Cu (copper): more than 0 mass% and 1.0 mass% or less; Co: more than 0 mass% and 1.0 mass% or less; and Al (aluminum): more than 0 mass% and 0.030 mass% or less. In a case where the weld metal contains such component(s), the effect of improving strength and low-temperature toughness can be enhanced.

Another aspect of the present invention which has been achieved in order to solve the problem is a welded structure including the weld metal. Since the welded structure includes the weld metal, high strength and high toughness at -60°C or less are obtained.

Advantageous Effects of the Invention

As described above, the weld metal and welded structure in the present invention, which are produced by gas-shielded arc welding with a flux-cored wire, have high strength and high toughness at -60°C or less after SR annealing.

Brief Description of the Drawings

[FIG. 1] FIG. 1 is a schematic view of the groove shape used in Examples when producing weld metals.
[FIG. 2A] FIG. 2A is a first diagram for describing a method for calculating the average equivalent circular diameter of grain-boundary carbides.
[FIG. 2B] FIG. 2B is a second diagram for describing a method for calculating the average equivalent circular diameter of grain-boundary carbides.
[FIG. 2C] FIG. 2C is a third diagram for describing a method for calculating the average equivalent circular diameter of grain-boundary carbides.
[FIG. 3] FIG. 3 is a schematic view of the shape of specimens subjected to a tensile test in Examples.
[FIG. 4] FIG. 4 is a schematic view of a position from which each of specimens for use in toughness evaluation in Examples was taken out.

Description of Embodiments

Embodiments of the weld metal and welded structure in the present invention are described below.

[Weld Metal]

The weld metal contains carbides each having an equivalent circular diameter of less than 0.40 $\mu$m, and these carbides have an average equivalent circular diameter of 0.10 $\mu$m or more.
As described above, in a case where fine carbides formed during welding are present in the grains of a weld metal, the weld metal has unstable low-temperature toughness. In contrast, the weld metal of the present invention contains carbides present in the grains retaining relatively large sizes, and hence, excellent low-temperature toughness is obtained after SR annealing.
Among the carbides present in the grains of the weld metal, the lower limit of the average equivalent circular diameter of the carbides each having an equivalent circular diameter of less than 0.40 $\mu$m is 0.10 $\mu$m as described above, and is preferably 0.15 $\mu$m, and more preferably 0.20 $\mu$m. There are cases where carbides have sizes which have been so reduced that the average equivalent circular diameter of these carbides cannot be evaluated even by the method for determining the average equivalent circular diameter of carbides which will be described later. In such cases, it is evaluated that "the carbides each having an equivalent circular diameter of less than 0.40 $\mu$m have an average equivalent circular diameter of less than 0.10 $\mu$m".
In the weld metal, the average equivalent circular diameter of carbides which are present at the grain boundaries and which each have an equivalent circular diameter of 0.40 $\mu$m or more is 0.75 $\mu$m or less.
The larger the sizes of the carbides formed in SR annealing, the lower the toughness of the weld metal. The grain-boundary carbides, which have been formed at grain boundaries, are more prone to enlarge than the carbides present in the grains. Furthermore, since the prior austenite grain boundaries embrittle upon annealing, cracks are apt to grow preferentially from the prior austenite grain boundaries. Because of this, in a case where coarse carbides are present at the prior austenite grain boundaries, cracks are prone to generate from these carbides as starting points, and hence, this cracking, combined with the embrittlement by annealing, considerably reduces the toughness upon SR annealing. In contrast, in the weld metal, since the grain-boundary carbides are kept fine as described above, excellent low-temperature toughness is obtained after SR annealing.
Among the carbides present at the grain boundaries of the weld metal, the upper limit of the average equivalent circular diameter of the carbides each having an equivalent circular diameter of 0.40 $\mu$m or more is 0.75 $\mu$m as described above, and is preferably 0.70 $\mu$m, and more preferably 0.65 $\mu$m. There are cases where grain-boundary carbides have sizes which have been so reduced that the average equivalent circular diameter of these grain-boundary carbides cannot be evaluated even by the method for determining the average equivalent circular diameter of grain-boundary carbides which will be described later. In such cases, it is evaluated that "the grain-boundary carbides each having an equivalent circular diameter of 0.40 $\mu$m or more have an average equivalent circular diameter of 0.75 $\mu$m or less".

<Composition>

The weld metal has a composition including: C (carbon): 0.02 mass% or more and 0.08 mass% or less; Si (silicon): 0.10 mass% or more and 0.30 mass% or less; Mn (manganese): 1.20 mass% or more and 2.0 mass% or less;

Ni (nickel): 0.50 mass% or more and 3.00 mass% or less; Cr (chromium): 0 mass% or more and 0.70 mass% or less; Mo (molybdenum): 0.10 mass% or more and 0.70 mass% or less; Ti (titanium): 0.04 mass% or more and 0.08 mass% or less; B (boron): 0.0010 mass% or more and 0.0050 mass% or less; O (oxygen): 0.030 mass% or more and 0.100 mass% or less; N (nitrogen): more than 0 mass% and 0.015 mass% or less; Nb (niobium) + V (vanadium): 0.008 mass% or more and 0.05 mass% or less; and the remainder being Fe and unavoidable impurities.

[C (carbon)]

C is an element for ensuring the strength of the weld metal after SR annealing. The lower limit of the C content in the weld metal is 0.02 mass%, preferably 0.03 mass%, and more preferably 0.04 mass%. Meanwhile, the upper limit of the C content in the weld metal is 0.08 mass%, and preferably 0.07 mass%. In a case where the C content of the weld metal is less than the lower limit, there is a possibility that a given strength might not be obtained after SR annealing. Conversely, in a case where the C content of the weld metal exceeds the upper limit, there is a possibility that the grain-boundary carbides might enlarge during SR annealing, resulting in a decrease in the toughness of the weld metal.

[Si (silicon)]

Si is an element for ensuring the strength of the weld metal after SR annealing. The lower limit of the Si content in the weld metal is 0.10 mass%, preferably 0.12 mass%, and more preferably 0.15 mass%. Meanwhile, the upper limit of the Si content in the weld metal is 0.30 mass%, preferably 0.25 mass%, and more preferably 0.20 mass%. In a case where the Si content of the weld metal is less than the lower limit, there is a possibility that a given strength might not be obtained after SR annealing. Conversely, in a case where the Si content of the weld metal exceeds the upper limit, there is a possibility that not only temper embrittlement during SR annealing might be promoted but also the formation of a hard second phase, which adversely affects the low-temperature toughness, is promoted, resulting in a decrease in the toughness of the weld metal.

[Mn (manganese)]

Mn is an element which forms an oxide serving as starting points for forming microstructures therefrom during the welding, thereby improving the strength and low-temperature toughness of the weld metal. The lower limit of the Mn content in the weld metal is 1.20 mass%, preferably 1.30 mass%, and more preferably 1.40 mass%. Meanwhile, the upper limit of the Mn content in the weld metal is 2.0 mass%, preferably 1.8 mass%, and more preferably 1.7 mass%. In a case where the Mn content of the weld metal is less than the lower limit, there is a possibility that the oxide might be less apt to be formed, making it impossible to sufficiently improve the strength and low-temperature toughness of the weld metal. Conversely, in a case where the Mn content of the weld metal exceeds the upper limit, there is a possibility that temper embrittlement during SR annealing might be promoted, resulting in a decrease in the toughness of the weld metal.

[Ni (nickel)]

Ni is an element which is effective for improving the low-temperature toughness of the weld metal. The lower limit of the Ni content in the weld metal is 0.50 mass%, preferably 0.60 mass%, and more preferably 0.70 mass%. Meanwhile, the upper limit of the Ni content in the weld metal is 3.00 mass%, preferably 2.80 mass%, and more preferably 2.60 mass%. In a case where the Ni content of the weld metal is less than the lower limit, there is a possibility that the low-temperature toughness of the weld metal may not be sufficiently improved. Conversely, in a case where the Ni content of the weld metal exceeds the upper limit, there is a possibility that the weld metal might be unable to have given toughness after SR annealing, so that, for example, the annealed weld metal shows a reduced upper shelf energy in a Charpy test.

[Cr (chromium)]

Cr is an element which serves to reduce the sizes of grain-boundary carbides during SR annealing. It is, however, noted that the Cr content may be 0 mass% since other elements serving to reduce the sizes of grain-boundary carbides have been sufficiently added. Because of this, the lower limit of the Cr content in the weld metal is 0 mass%, preferably 0.20 mass%, and more preferably 0.30 mass%. Meanwhile, the upper limit of the Cr content in the weld metal is 0.70 mass%, preferably 0.65 mass%, and more preferably 0.60 mass%. In a case where the Cr content of the weld metal is less than the lower limit, there is a possibility that the grain-boundary carbides might not be reduced in size during SR annealing, making it impossible to sufficiently improve the toughness of the weld metal. Conversely, in a case where the Cr content of the weld metal exceeds the upper limit, there is a possibility that the grain-boundary carbides might enlarge to reduce the toughness of the weld metal.

[Mo (molybdenum)]

Mo is an element which inhibits the enlargement of grain-boundary carbides and softening due to annealing, by promoting microprecipitation in the grains of the weld metal. The lower limit of the Mo content in the weld metal is 0.10 mass%, preferably 0.20 mass%, and more preferably 0.30 mass%. Meanwhile, the upper limit of the Mo content in the weld metal is 0.70 mass%, preferably 0.65 mass%, and more preferably 0.60 mass%. In a case where the Mo content of the weld metal is less than the lower limit, there is a possibility that the enlargement of grain-boundary carbides and softening due to annealing may not be sufficiently inhibited. Conversely, in a case where the Mo content of the weld metal exceeds the upper limit, there is a possibility that fine carbides might precipitate during SR annealing to excessively heighten the strength of the weld metal, thereby reducing the low-temperature toughness.

[Ti (titanium)]

Ti is an element which forms an oxide serving as starting points for forming microstructures therefrom during the welding, thereby improving the toughness of the weld metal. The lower limit of the Ti content in the weld metal is 0.04 mass%, preferably 0.05 mass%, and more preferably 0.055 mass%. Meanwhile, the upper limit of the Ti content in the weld metal is 0.08 mass%, preferably 0.075 mass%, and more preferably 0.07 mass%. In a case where the Ti content of the weld metal is less than the lower limit, there is a possibility that the oxide might be less apt to be formed, making it impossible to sufficiently improve the toughness of the weld metal. Conversely, in a case where the Ti content of the weld metal exceeds the upper limit, there is a possibility that fine carbides might precipitate during SR annealing to excessively heighten the strength of the weld metal, thereby reducing the low-temperature toughness.

[B (boron)]

B is an element which inhibits the formation of grain-boundary ferrite which adversely affects the strength and toughness of the weld metal. The lower limit of the B content in the weld metal is 0.0010 mass%, preferably 0.0012 mass%, and more preferably 0.0015 mass%. Meanwhile, the upper limit of the B content in the weld metal is 0.0050 mass%, preferably 0.0045 mass%, and more preferably 0.0040 mass%. In a case where the B content of the weld metal is less than the lower limit, there is a possibility that the formation of grain-boundary ferrite may not be sufficiently inhibited, making it impossible to ensure given strength and toughness of the weld metal. Conversely, in a case where the B content of the weld metal exceeds the upper limit, there is a possibility that the weld metal might have excessively heightened strength, resulting in a decrease in toughness.

[O (oxygen)]

O is an element which forms oxides serving as starting points for forming microstructures therefrom during the welding, thereby improving the toughness of the weld metal. The lower limit of the O content in the weld metal is 0.030 mass%, preferably 0.035 mass%, and more preferably 0.040 mass%. Meanwhile, the upper limit of the O content in the weld metal is 0.100 mass%, preferably 0.080 mass%, and more preferably 0.060 mass%. In a case where the O content of the weld metal is less than the lower limit, there is a possibility that the oxides might not be sufficiently formed, making it impossible to ensure given toughness of the weld metal. Conversely, in a case where the O content of the weld metal exceeds the upper limit, there is a possibility that oxide enlargement might occur to reduce the toughness of the weld metal.

[N (nitrogen)]

N is an element unavoidably contained in the weld metal, and it is industrially impossible to reduce the content thereof to 0 mass%. Consequently, the N content in the weld metal is more than 0 mass%. Meanwhile, the upper limit of the N content in the weld metal is 0.015 mass%, preferably 0.010 mass%, and more preferably 0.008 mass%. In a case where the N content of the weld metal exceeds the upper limit, there is a possibility that the weld metal might have reduced toughness.

[Nb (niobium) and V (vanadium)]

Nb and V are elements which inhibit grain-boundary carbides from enlarging. The lower limit of the total content of Nb and V in the weld metal is 0.008 mass%, preferably 0.010 mass%, and more preferably 0.012 mass%. Meanwhile, the upper limit of the total content of Nb and V in the weld metal is 0.05 mass%, preferably 0.045 mass%, and more preferably 0.040 mass%. In a case where the total content of Nb and V is less than the lower limit, there is a possibility that the enlargement of grain-boundary carbides may not be sufficiently inhibited. Conversely, in a case where the total content of Nb and V exceeds the upper limit, there is a possibility that fine carbides might precipitate during SR annealing to excessively heighten the strength of the weld metal, thereby reducing the low-temperature toughness.

As described above, the weld metal contains C, Si, Mn, Ni, Cr, Mo, Ti, B, O, N, Nb, and V as basic components. The weld metal contains Fe and unavoidable impurities as the remainder, besides those basic components. With respect to the unavoidable impurities, inclusion of elements, such as P (phosphorus), S (sulfur), and Sn (tin), which would come into the weld metal from raw materials and materials and depending on the state of production equipment, etc. is permissible. Of unavoidable impurities, in particular, P is an element which considerably promotes temper embrittlement during SR annealing. It is therefore preferred to at least reduce the P content to 0.010 mass% or less.

[Cu (copper)]

The weld metal may contain, for example, Cu as one of elements other than the basic components. Cu is an element useful for ensuring the strength of the weld metal. The Cu content in the weld metal is preferably more than 0 mass%, and the lower limit of the Cu content thereof is preferably 0.05 mass%, and more preferably 0.10 mass%. Meanwhile, the upper limit of the Cu content in the weld metal is preferably 1.0 mass%, and more preferably 0.8 mass%. In a case where the Cu content of the weld metal is less than the lower limit, there is a possibility that the effect of improving the strength of the weld metal might be insufficient. Conversely, in a case where the Cu content of the weld metal exceeds the upper limit, there is a possibility that the Cu might excessively heighten the strength of the weld metal, resulting in a decrease in toughness.

[Co (cobalt)]

The weld metal may contain Co as one of the elements other than the basic components. Co is an element useful for ensuring the strength of the weld metal. The Co content in the weld metal is preferably more than 0 mass%, and the lower limit of the Co content thereof is preferably 0.05 mass%, and more preferably 0.10 mass%. Meanwhile, the upper limit of the Co content in the weld metal is preferably 1.0 mass%, and more preferably 0.8 mass%. In a case where the Co content of the weld metal is less than the lower limit, there is a possibility that the effect of improving the strength of the weld metal might be insufficient. Conversely, in a case where the Co content of the weld metal exceeds the upper limit, there is a possibility that the Co might excessively heighten the strength of the weld metal, resulting in a decrease in toughness.

[Al (aluminum)]

Furthermore, the weld metal may contain Al as one of the elements other than the basic components. Al is an element which forms an oxide serving as starting points for forming microstructures therefrom during the welding and improves the strength and toughness of the weld metal. The Al content in the weld metal is preferably more than 0 mass%, and the lower limit of the Al content thereof is preferably 0.005 mass%, and more preferably 0.010 mass%. Meanwhile, the upper limit of the Al content in the weld metal is preferably 0.030 mass%, more preferably 0.025 mass%, and even more preferably 0.020 mass%. In a case where the Al content of the weld metal is less than the lower limit, there is a possibility that the oxide might not be sufficiently formed, making the effect of improving the strength and toughness of the weld metal insufficient. Conversely, in a case where the Al content of the weld metal exceeds the upper limit, there is a possibility that the oxide might enlarge to lower the toughness of the weld metal.

Any one of Cu, Co, and Al may be contained, or two or more thereof may be contained in combination.

<Relational Formula for Components>

In a case where the contents [mass%] of C, Mo, Ti, Nb, and V, which are major elements constituting the carbides in the grains, are expressed by [C], [Mo], [Ti], [Nb], and [V], respectively, the influence degree of these elements for reduction of the low-temperature toughness can be defined by the X value shown by the following formula (1), while taking account of the degree of the influence of each of these elements on the low-temperature toughness. The lower limit of the X value is preferably 9, and more preferably 10. Meanwhile, the upper limit of the X value is preferably 14, and more preferably 13. In a case where the X value is less than the lower limit, the growth of the carbides in the grains tends to be inhibited, resulting in a possibility that the carbides in the grains might be finer. Conversely, in a case where the X value exceeds the upper limit, nucleation of the carbides in the grains tends to be promoted, resulting in a possibility that the carbides in the grains might be finer.

$$\text{X value} = ([Mo]+[Ti]+[Nb]+2\times[V])/[C] \quad \dots \quad (1)$$

<Welding Method>

Gas-shielded arc welding in which a flux-cored wire (FCW) is used is preferred as a welding method for obtaining the weld metal. By applying the arc welding, the efficiency of welding operation can be improved.

It is, however, necessary for achieving the weld metal that the welding material and welding conditions should be suitably controlled. Components of the welding material are, of course, restricted by the required components of the weld metal. Furthermore, welding conditions and components of the welding material must be suitably controlled in order to obtain specific carbide forms.

The flux-cored wire to be used as a welding material may be as follows. In a case where the contents [mass%] of C, Mo, Ti, Nb, and V are expressed by [C], [Mo], [Ti], [Nb], and [V], respectively, the influence degree of these elements for reduction of the low-temperature toughness can be defined by the Y value shown by the following formula (2), while taking account of the degree of the influence of each of these elements on the low-temperature toughness. The lower limit of the Y value is preferably 12, and more preferably 12.5. Meanwhile, the upper limit of the Y value is preferably 20, and more preferably 19.5. In a case where the Y value is less than the lower limit, the growth of the carbides in the grains tends to be inhibited, resulting in a possibility that the carbides in the grains might be finer. Conversely, in a case where the Y value exceeds the upper limit, nucleation of the carbides in the grains tends to be promoted, resulting in a possibility that the carbides in the grains might be finer.

$$\text{Y value} = \{[Mo]+([Ti]-4)+[Nb]+2\times[V]\}/[C] \quad \dots \quad (2)$$

The lower limit of the ratio of the content of metallic Si [mass%] to the content of $SiO_2$ [mass%] in the flux-cored wire is preferably 0.90, more preferably 0.93, and even more preferably 1.00. Meanwhile, the upper limit of that ratio is preferably 3.0, and more preferably 2.5. In a case where that ratio is less than the lower limit, the weld metal has an insufficient solute Si content, resulting in unstable carbides and an increase in the sizes of grain-boundary carbides. There is hence a possibility that the grain-boundary carbides each having an equivalent circular diameter of 0.40 μm or more may not retain the average equivalent circular diameter being equal to or less than the upper limit. Conversely, in a case where that ratio exceeds the upper limit, there is a possibility that the efficiency of welding operation might decrease.

Preferred welding conditions for the gas-shielded arc welding in which a flux-cored wire is used are as follows. First, the lower limit of the heat input is preferably 0.7 kJ/mm, and more preferably 1.0 kJ/mm. Meanwhile, the upper limit of the heat input is preferably 2.5 kJ/mm, more preferably 2.0 kJ/mm, and even more preferably 1.6 kJ/mm. In a case where the heat input is less than the lower limit, there is a possibility that the efficiency of welding operation during the welding might decrease. Conversely, in a case where the heat input exceeds the upper limit, there is a possibility that the cooling rate during the welding might be so low that not only the given strength of the weld metal is not obtained but also carbides are formed during the cooling and these carbides grow during SR annealing, making it impossible to obtain the desired forms of grain-boundary carbides. There is a possibility that the weld metal might hence have reduced toughness after the SR annealing.

In the gas-shielded arc welding, the lower limit of the preheating temperature and interpass temperature is preferably 100°C, and more preferably 120°C. Meanwhile, the upper limit of the preheating temperature and interpass temperature is preferably 180°C, and more preferably 160°C. In a case where the preheating temperature and the interpass temperature are lower than the lower limit, there is a possibility that low-temperature cracking might prone to occur. Conversely, in a case where the preheating temperature and the interpass temperature exceed the upper limit, there is a possibility that the cooling rate during the welding might be so low that not only the given strength of the weld metal is not obtained but also carbides are formed during the cooling and these carbides grow during SR annealing, making it impossible to obtain the desired forms of grain-boundary carbides. There is a possibility that the weld metal might hence have reduced toughness after the SR annealing.

With respect to annealing conditions including SR annealing temperature and SR annealing period, the annealing may be conducted under conditions which have hitherto been used. However, from the standpoint of controlling the grain-boundary carbides, it is preferred to set those conditions as shown below.

Namely, the lower limit of the SR annealing temperature is preferably 580°C, and more preferably 600°C. Meanwhile, the upper limit of the SR annealing temperature is preferably 680°C, and more preferably 650°C. In a case where the SR annealing temperature is lower than the lower limit, there is a possibility that the stress generated during the welding may not be sufficiently removed. Conversely, in a case where the SR annealing temperature exceeds the upper limit, there is a possibility that the enlargement of grain-boundary carbides during the SR annealing might be promoted to make it impossible to obtain the desired forms of grain-boundary carbides, resulting in a decrease in the toughness of the weld metal which has undergone the SR annealing.

The lower limit of the SR annealing period is preferably 2 hours, and more preferably 3 hours. Meanwhile, the upper limit of the SR annealing period is preferably 12 hours, and more preferably 10 hours. In a case where the SR annealing period is less than the lower limit, there is a possibility that the stress generated during the welding may not be sufficiently removed. Conversely, in a case where the SR annealing period exceeds the upper limit, there is a possibility that the enlargement of grain-boundary carbides during the SR annealing might be promoted to make it impossible to obtain the desired forms of grain-boundary carbides, resulting in a decrease in the toughness of the weld metal which has undergone the SR annealing.

By performing welding and SR annealing under such conditions, the weld metal which has sufficient strength and exhibits excellent low-temperature toughness can be formed.

[Welded Structure]

The welded structure includes the weld metal. When producing, for example, a welded structure for use in submarine oil-field drilling and oil production, the welded structure including the weld metal is obtained by welding given members under the welding conditions shown above. Since the welded structure includes the weld metal, high strength and high toughness at -60°C or less can be ensured. As a result, welded structures or the like for use in submarine oil-field drilling and oil production are improved in terms of reliability, durability, etc.

<Advantages>

The weld metal has high strength because the weld metal contains Mo which serves to inhibit softening due to annealing. Since the weld metal contains a given amount of Mo and further contains Nb and V in a given total amount, the enlargement of grain-boundary carbides can be inhibited. Furthermore, since the grain-boundary carbides each having an equivalent circular diameter of 0.40 $\mu$m or more have an average equivalent circular diameter of 0.75 $\mu$m or less because of, for example, the effect of inhibiting the enlargement of grain-boundary carbides, the weld metal is less apt to suffer cracks generating from coarse grain-boundary carbides as starting points and is inhibited from decreasing in toughness upon SR annealing. In addition, since the carbides present in the grains and each having an equivalent circular diameter of less than 0.40 $\mu$m have an average equivalent circular diameter of 0.10 $\mu$m or more, the weld metal has stable low-temperature toughness and has high toughness at -60°C or less.

Examples

The present invention is described below in more detail by reference to Examples, but the present invention should not be construed as being limited to the Examples.

First, a plurality of flux-cored wires each having a wire diameter of 1.2 mm and a flux filling ratio of 15.5 mass% were produced. More specifically, thirty-one kinds of flux-cored wires respectively employing welding materials 3F1 to 3F31 differing in component content, as shown in table 1, were produced. In Table 1, "Others" is the remainder, and indicates the Fe content and unavoidable impurities. Each symbol "-" in Table 1 indicates that the component is not contained.

Table 1

| Welding material | Component content [mass%] | | | | | | | | | | | | | | Metallic Si / SiO$_2$ | Y value |
|---|---|---|---|---|---|---|---|---|---|---|---|---|---|---|---|---|
| | C | Metallic Si | SiO$_2$ | Mn | Ni | Cr | Mo | Ti | B | Cu | Co | Nb | V | Others | | |
| 3F1 | 0.04 | 0.31 | 0.24 | 2.2 | 1.0 | 0.44 | 0.38 | 4.25 | 0.006 | - | - | - | 0.01 | 91 | 1.29 | 16.3 |
| 3F2 | 0.06 | 0.31 | 0.24 | 2.3 | 1.0 | 0.46 | 0.62 | 4.10 | 0.006 | - | - | - | 0.01 | 91 | 1.29 | 12.3 |
| 3F3 | 0.04 | 0.40 | 0.35 | 2.3 | 1.0 | 0.43 | 0.49 | 4.25 | 0.006 | - | - | - | 0.01 | 91 | 1.14 | 19.0 |
| 3F4 | 0.04 | 0.30 | 0.21 | 2.9 | 1.0 | 0.43 | 0.53 | 4.10 | 0.007 | - | - | - | 0.01 | 91 | 1.43 | 16.3 |
| 3F5 | 0.05 | 0.30 | 0.21 | 2.3 | 0.6 | 0.46 | 0.45 | 4.10 | 0.006 | - | - | 0.01 | - | 91 | 1.43 | 12.4 |
| 3F6 | 0.05 | 0.30 | 0.21 | 2.2 | 2.9 | - | 0.36 | 4.25 | 0.006 | - | - | 0.01 | 0.01 | 90 | 1.43 | 12.8 |
| 3F7 | 0.04 | 0.31 | 0.24 | 2.0 | 1.0 | 0.67 | 0.35 | 4.15 | 0.006 | - | - | 0.01 | 0.01 | 91 | 1.29 | 13.3 |
| 3F8 | 0.05 | 0.40 | 0.21 | 2.2 | 0.9 | 0.21 | 0.63 | 4.25 | 0.007 | - | - | - | 0.01 | 91 | 1.90 | 18.0 |
| 3F9 | 0.04 | 0.31 | 0.24 | 2.2 | 1.0 | 0.42 | 0.33 | 4.30 | 0.004 | - | - | - | 0.01 | 91 | 1.29 | 16.3 |
| 3F10 | 0.05 | 0.30 | 0.21 | 2.2 | 2.5 | - | 0.36 | 4.25 | 0.008 | - | - | - | 0.01 | 90 | 1.43 | 14.0 |
| 3F11 | 0.05 | 0.30 | 0.21 | 2.2 | 1.0 | 0.43 | 0.53 | 4.10 | 0.006 | - | - | - | 0.01 | 91 | 1.43 | 14.4 |
| 3F12 | 0.04 | 0.15 | 0.16 | 2.2 | 1.0 | 0.41 | 0.43 | 4.20 | 0.006 | - | - | - | 0.01 | 91 | 0.94 | 16.3 |
| 3F13 | 0.05 | 0.19 | 0.20 | 2.2 | 1.0 | 0.42 | 0.45 | 4.20 | 0.006 | - | - | 0.02 | 0.02 | 91 | 0.95 | 14.2 |
| 3F14 | 0.04 | 0.24 | 0.20 | 2.2 | 1.0 | 0.42 | 0.41 | 4.31 | 0.006 | 0.84 | - | - | 0.01 | 90 | 1.20 | 18.5 |
| 3F15 | 0.04 | 0.40 | 0.21 | 2.2 | 1.0 | 0.40 | 0.40 | 4.25 | 0.006 | - | - | - | 0.01 | 91 | 1.90 | 16.8 |
| 3F16 | 0.04 | 0.30 | 0.21 | 2.2 | 1.0 | 0.39 | 0.41 | 4.10 | 0.006 | - | 0.75 | - | 0.01 | 91 | 1.43 | 13.3 |
| 3F17 | 0.04 | 0.30 | 0.21 | 2.3 | 1.6 | 0.33 | 0.33 | 4.25 | 0.005 | - | - | 0.01 | 0.01 | 91 | 1.43 | 13.9 |
| 3F18 | 0.04 | 0.24 | 0.20 | 2.2 | 2.2 | 0.15 | 0.34 | 4.25 | 0.007 | - | - | - | 0.01 | 90 | 1.20 | 15.3 |
| 3F19 | 0.04 | 0.24 | 0.20 | 2.2 | 1.0 | 0.42 | 0.41 | 4.10 | 0.007 | - | - | 0.01 | - | 91 | 1.20 | 13.0 |
| 3F20 | 0.04 | 0.40 | 0.21 | 2.2 | 1.0 | 0.44 | 0.40 | 4.10 | 0.007 | - | - | 0.01 | - | 91 | 1.90 | 12.8 |
| 3F21 | 0.08 | 0.45 | 0.22 | 2.2 | 1.0 | 0.41 | 0.56 | 4.25 | 0.007 | - | - | - | 0.01 | 91 | 2.05 | 10.4 |
| 3F22 | 0.05 | 0.31 | 0.24 | 2.2 | 0.9 | 0.30 | 0.40 | 4.25 | 0.008 | - | - | - | - | 91 | 1.29 | 13.0 |
| 3F23 | 0.05 | 0.24 | 0.20 | 3.1 | 0.6 | 0.40 | 0.50 | 4.31 | 0.003 | - | - | - | - | 91 | 1.20 | 16.2 |
| 3F24 | 0.04 | 0.30 | 0.21 | 2.2 | 3.3 | 0.46 | 0.41 | 4.25 | 0.007 | - | - | - | 0.01 | 89 | 1.43 | 17.0 |

| Welding material | Component content [mass%] | | | | | | | | | | | | | | Metallic Si / SiO$_2$ | Y value |
|---|---|---|---|---|---|---|---|---|---|---|---|---|---|---|---|---|
| | C | Metallic Si | SiO$_2$ | Mn | Ni | Cr | Mo | Ti | B | Cu | Co | Nb | V | Others | | |
| 3F25 | 0.05 | 0.40 | 0.21 | 2.3 | 1.0 | 0.77 | 0.43 | 4.40 | 0.007 | - | - | - | 0.01 | 90 | 1.90 | 17.7 |
| 3F26 | 0.05 | 0.30 | 0.21 | 2.8 | 1.0 | 0.20 | 0.90 | 4.25 | 0.002 | - | - | - | - | 90 | 1.43 | 23.0 |
| 3F27 | 0.06 | 0.30 | 0.21 | 2.2 | 1.0 | 0.23 | 0.31 | 4.55 | 0.007 | - | - | - | 0.01 | 91 | 1.43 | 14.7 |
| 3F28 | 0.06 | 0.30 | 0.21 | 2.1 | 2.0 | 0.40 | 0.44 | 4.25 | 0.008 | - | - | - | - | 90 | 1.43 | 12.5 |
| 3F29 | 0.05 | 0.40 | 0.21 | 2.2 | 1.0 | 0.30 | 0.60 | 4.25 | 0.008 | 1.10 | - | - | - | 90 | 1.90 | 17.0 |
| 3F30 | 0.05 | 0.20 | 0.20 | 2.1 | 0.9 | 0.20 | 0.50 | 4.31 | 0.008 | - | - | - | - | 92 | 1.00 | 16.2 |
| 3F31 | 0.06 | 0.24 | 0.25 | 2.3 | 1.0 | 0.36 | 0.46 | 4.25 | 0.007 | - | - | 0.01 | - | 91 | 0.96 | 12.0 |

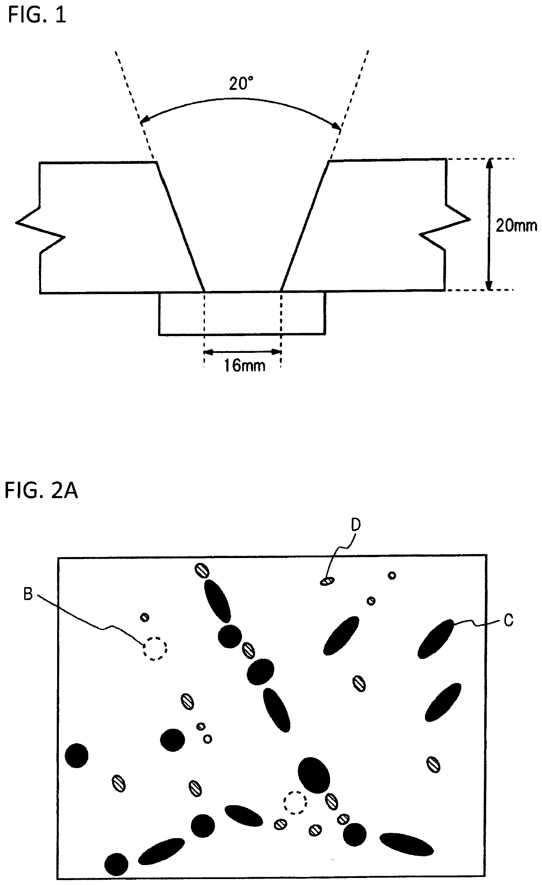

Next, SM490A steel plates each having an average thickness of 20 mm and processed so as to have the groove shape shown in FIG. 1 were used as base materials, and the weld metals No. 1 to No. 32 shown in Table 2 were obtained by gas-shielded arc welding under the following welding conditions. Using a mixed gas of 20% $CO_2$ and 80% Ar as a shielding gas at a flow rate of 25 L/min, the weld metals were produced by a build-up method of six-layer twelve passes under the conditions of: a V-shaped groove angle: 20°; root gap: 16 mm; welding position: flat; heat input conditions: any of the a to c shown below; and preheating temperature and interpass temperature: 140°C or more and 190°C or less. Furthermore, the weld metals thus produced were subjected to a heat treatment under the conditions of an SR annealing temperature of 620°C or more and 680°C or less and an SR annealing period of 2 hours or more and 8 hours or less. The welding conditions used for each of the weld metals produced are shown in Table 2.

    a) 1.0 kJ/mm, 230 A-25 V, 5.7 mm/sec
    b) 1.6 kJ/mm, 280 A-29 V, 5.1 mm/sec
    c) 2.0 kJ/mm, 280 A-29 V, 4.1 mm/sec

<Determination of Component Content>

With respect to Tests No. 1 to No. 32, a central portion of each heat-treated weld metal formed in the groove was cut out and subjected to chemical analyses for components. In Table 2, the content of each element in each weld metal determined by the chemical analyses are shown. In Table 2, each symbol "-" indicates that the component is not contained.

<Determination of Average Equivalent Circular Diameter of Grain-boundary Carbides having Equivalent Circular Diameter of 0.40 μm or more>

A specimen for replica TEM observation which had grain boundaries exposed thereon was taken out of a last-pass central portion of each weld metal that had undergone the heat treatment, and four images thereof having a field of view of 13.3×15.7 μm were captured at a magnification of 7,500. These images were analyzed with an image analysis software ("Image-ProPlus", manufactured by Media Cybernetics Inc.) to select carbides each having an equivalent circular diameter of 0.40 μm or more and then calculate the average equivalent circular diameter of the grain-boundary carbides. More specifically, the average equivalent circular diameter of the grain-boundary carbides each having an equivalent circular diameter of 0.40 μm or more was determined in the following manner.

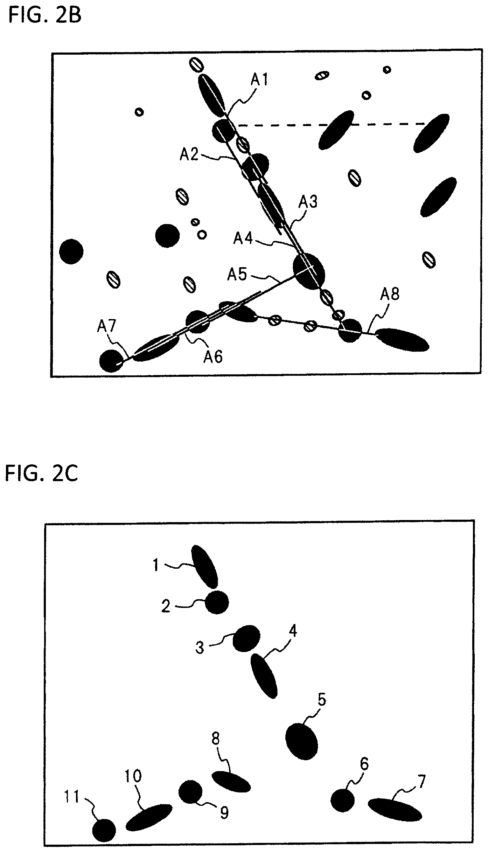

First, as shown in FIG. 2B, straight lines Ai (i = 1, 2, 3, · · · n; n is the total number of the straight lines) each having a length of 6 μm and crossing at least three carbides each having an equivalent circular diameter of 0.40 μm or more were drawn. In FIG. 2A, the region B indicated by a broken-line circle shows the reference size for carbides to be handled and indicates the size of a virtual complete circle having a diameter of 0.40 μm. In FIG. 2A to FIG. 2C, each solid range C indicates a carbide having an equivalent circular diameter of 0.40 μm or more, and each hatched range D indicates a carbide having an equivalent circular diameter of less than 0.40 μm. In FIG. 2B, the straight line indicated by a broken line has a length exceeding 6 μm. Thus, any straight line which has a length of 6 μm and which crosses up to two carbides each having an equivalent circular diameter of 0.40 μm or more is not included in the straight lines Ai.

Next, the carbides each having an equivalent circular diameter of 0.40 μm or more and crossed by the straight line Ai were selected as shown in FIG. 2C, and the average equivalent circular diameter thereof was calculated by image analysis. In FIG. 2C, the selected carbides are indicated by numerals 1 to 11. Straight line A1 shown in FIG. 2B is a straight line which crosses carbides 1, 2, and 3. Likewise, straight line A2 is a straight line which crosses carbides 2, 3, and 4; straight line A3 is a straight line which crosses carbides 3, 4, and 5; straight line A4 is a straight line which crosses carbides 4, 5, and 6; straight line A5 is a straight line which crosses carbides 5, 8, and 9; straight line A6 is a straight line which crosses carbides 8, 9, and 10; straight line A7 is a straight line which crosses carbides 8, 9, 10, and 11; and straight line A8 is a straight line which crosses carbides 8, 6, and 7. The results concerning the average equivalent circular diameter of grain-boundary carbides calculated by this method are shown in Table 2.

In the case where the carbide sizes are so small that no straight line Ai having a length of 6 μm and crossing at least three carbides each having an equivalent circular diameter of 0.40 μm or more is able to be drawn, this specimen is rated as satisfying "an average equivalent circular diameter of 0.75 μm or less".

<Determination of Average Equivalent Circular Diameter of Carbides having Equivalent Circular Diameter of less than 0.40 μm>

A specimen for replica TEM observation was taken out of grains of each weld metal that had undergone the heat treatment, and the average equivalent circular diameter of carbides each having an equivalent circular diameter of less than 0.40 μm was calculated in the same manner as for the determination of the average equivalent circular diameter of grain-boundary carbides each having an equivalent circular diameter of 0.40 μm or more. More specifically, the carbides in the grains remained without being selected as carbides each having an equivalent circular diameter of 0.40 μm or more in the method shown above were subjected to image analysis to calculate the average equivalent circular diameter thereof. The results concerning the average equivalent circular diameter of carbides calculated by this method are shown in Table 2.

<Strength Evaluation>

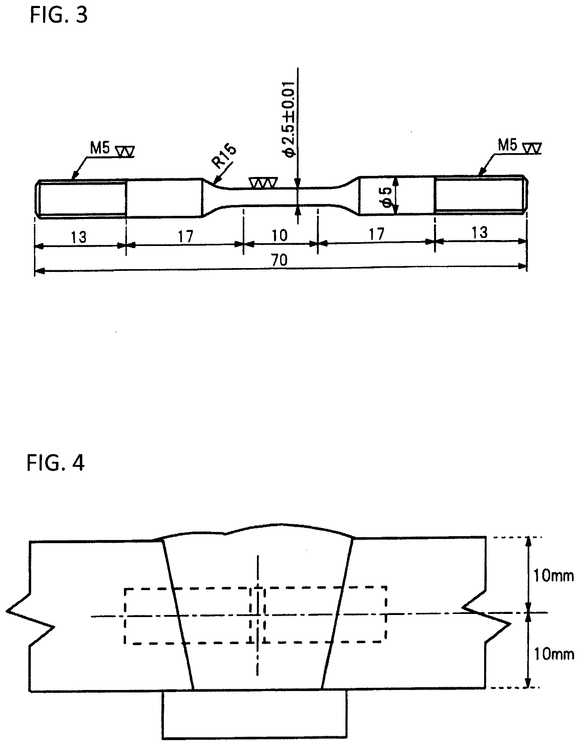

As strength evaluation, a tensile test was performed with respect to each weld metal. In this tensile test, specimens in accordance with JIS-Z2202 (1988) as shown in FIG. 3 were taken out from a plate-thickness central portion of each heat-treated weld metal along a direction parallel with the welding direction. These specimens were examined for tensile strength (TS) at room temperature (25°C) in accordance with JIS-Z2241 (2011). In this test, specimens having a tensile strength TS exceeding 620 MPa were rated as excellent in terms of strength. The results of the tensile strength measurements are shown in Table 2. In FIG. 3, the unit of the numerals indicating dimensions is mm.

<Evaluation of Low-temperature Toughness>

In the evaluation of low-temperature toughness, No. 4 V-notched specimens in accordance with JIS-Z3111 (2005) were taken out, as Charpy impact test specimens, from a plate-thickness central portion of each heat-treated weld metal along a direction perpendicular to the welding direction on the basis of FIG. 4. These specimens were subjected to a Charpy impact test at -40°C and -60°C in accordance with JIS-Z2242

(2005). In this test, specimens which had an absorption energy at -60°C $vE_{-60}$ exceeding 40 J in terms of an average value for three measurements were rated as excellent in terms of low-temperature toughness. The results of the low-temperature toughness measurements are shown in Table 2. The absorption energy at -40°C $vE_{-40}$ and absorption energy at -60°C $vE_{-60}$ shown in Table 2 are each an average value for three measurements. The absorption energy at -40°C $vE_{-40}$ is shown for reference, and specimens having a value of $vE_{-40}$ exceeding 60 J can be rated as excellent in terms of toughness at relatively low temperatures.

Table 2

| Test No. | Welding conditions | | | Content [mass%] | | | | | | | | | | | | | | | X value |
|---|---|---|---|---|---|---|---|---|---|---|---|---|---|---|---|---|---|---|---|
| | Welding material No. | Heat input conditions | Pre-heating / interpass temperature [°C] | C | Si | Mn | Ni | Cr | Mo | Ti | B | O | N | Nb | V | Cu | Co | Al | |
| 1 | 3F1 | a | 140 | 0.042 | 0.18 | 1.45 | 0.95 | 0.43 | 0.37 | 0.063 | 0.0032 | 0.046 | 0.0055 | - | 0.01 | - | - | - | 10.8 |
| 2 | 3F2 | b | 160 | 0.065 | 0.19 | 1.48 | 0.98 | 0.45 | 0.57 | 0.067 | 0.0030 | 0.050 | 0.0057 | - | 0.01 | - | - | - | 10.1 |
| 3 | 3F3 | b | 140 | 0.045 | 0.25 | 1.50 | 0.96 | 0.42 | 0.52 | 0.065 | 0.0028 | 0.048 | 0.0062 | - | 0.01 | - | - | - | 13.4 |
| 4 | 3F4 | b | 160 | 0.044 | 0.16 | 1.88 | 0.95 | 0.42 | 0.52 | 0.058 | 0.0035 | 0.048 | 0.0054 | - | 0.01 | - | - | - | 13.6 |
| 5 | 3F5 | b | 140 | 0.048 | 0.17 | 1.47 | 0.62 | 0.45 | 0.42 | 0.065 | 0.0030 | 0.047 | 0.0061 | 0.01 | - | - | - | - | 10.3 |
| 6 | 3F6 | b | 180 | 0.040 | 0.15 | 1.46 | 2.85 | - | 0.32 | 0.058 | 0.0031 | 0.051 | 0.0063 | 0.01 | 0.01 | - | - | - | 10.2 |
| 7 | 3F7 | b | 140 | 0.042 | 0.20 | 1.35 | 0.99 | 0.65 | 0.30 | 0.060 | 0.0032 | 0.050 | 0.0068 | 0.01 | 0.01 | - | - | - | 9.3 |
| 8 | 3F8 | b | 140 | 0.052 | 0.22 | 1.42 | 0.90 | 0.20 | 0.62 | 0.060 | 0.0033 | 0.048 | 0.0058 | - | 0.01 | - | - | - | 13.5 |
| 9 | 3F9 | b | 160 | 0.045 | 0.19 | 1.45 | 0.94 | 0.41 | 0.32 | 0.072 | 0.0021 | 0.046 | 0.0054 | - | 0.01 | - | - | - | 9.2 |
| 10 | 3F10 | b | 140 | 0.045 | 0.18 | 1.44 | 2.45 | - | 0.35 | 0.060 | 0.0040 | 0.050 | 0.0055 | - | 0.01 | - | - | - | 9.6 |
| 11 | 3F11 | a | 140 | 0.048 | 0.17 | 1.46 | 0.95 | 0.42 | 0.52 | 0.058 | 0.0030 | 0.078 | 0.0055 | - | 0.01 | - | - | - | 12.5 |
| 12 | 3F12 | c | 140 | 0.045 | 0.16 | 1.45 | 0.94 | 0.40 | 0.42 | 0.058 | 0.0032 | 0.049 | 0.0075 | - | 0.01 | - | - | - | 11.1 |
| 13 | 3F13 | b | 140 | 0.046 | 0.16 | 1.44 | 0.94 | 0.41 | 0.44 | 0.060 | 0.0030 | 0.050 | 0.0055 | 0.02 | 0.02 | - | - | - | 12.2 |
| 14 | 3F14 | b | 140 | 0.044 | 0.15 | 1.46 | 0.93 | 0.41 | 0.40 | 0.059 | 0.0031 | 0.049 | 0.0062 | - | 0.01 | 0.8 | - | - | 10.9 |
| 15 | 3F15 | b | 140 | 0.045 | 0.15 | 1.45 | 0.95 | 0.39 | 0.39 | 0.057 | 0.0030 | 0.048 | 0.0058 | - | 0.01 | - | - | 0.02 | 10.4 |
| 16 | 3F16 | b | 140 | 0.045 | 0.17 | 1.45 | 0.94 | 0.38 | 0.40 | 0.056 | 0.0032 | 0.052 | 0.0059 | - | 0.01 | - | 0.7 | - | 10.6 |

Table 2 continued

| Test No. | Welding material No. | Heat input conditions | Pre-heating / interpass temperature [°C] | C | Si | Mn | Ni | Cr | Mo | Ti | B | O | N | Nb | V | Cu | Co | Al | X value |
|---|---|---|---|---|---|---|---|---|---|---|---|---|---|---|---|---|---|---|---|
| | | Welding conditions | | Content [mass%] | | | | | | | | | | | | | | | |
| 17 | 3F17 | b | 140 | 0.043 | 0.14 | 1.47 | 1.52 | 0.32 | 0.32 | 0.061 | 0.0025 | 0.050 | 0.0057 | 0.01 | 0.01 | - | - | - | 9.6 |
| 18 | 3F18 | b | 140 | 0.044 | 0.15 | 1.43 | 2.10 | 0.15 | 0.33 | 0.058 | 0.0034 | 0.049 | 0.0055 | - | 0.01 | - | - | - | 9.3 |
| 19 | 3F19 | b | 140 | 0.045 | 0.15 | 1.45 | 0.94 | 0.41 | 0.40 | 0.050 | 0.0035 | 0.047 | 0.0054 | 0.01 | - | - | - | - | 10.2 |
| 20 | 3F20 | b | 140 | 0.044 | 0.16 | 1.44 | 0.95 | 0.43 | 0.39 | 0.055 | 0.0036 | 0.048 | 0.0058 | 0.01 | - | - | - | - | 10.3 |
| 21 | 3F21 | b | 160 | 0.090 | 0.15 | 1.45 | 0.95 | 0.40 | 0.55 | 0.058 | 0.0033 | 0.052 | 0.0056 | - | 0.01 | - | - | - | 7.0 |
| 22 | 3F22 | b | 140 | 0.050 | 0.35 | 1.56 | 0.93 | 0.26 | 0.44 | 0.074 | 0.0035 | 0.049 | 0.0072 | - | - | - | - | - | 10.3 |
| 23 | 3F23 | c | 160 | 0.050 | 0.24 | 2.28 | 0.66 | 0.38 | 0.55 | 0.070 | 0.0011 | 0.053 | 0.0048 | - | - | - | - | - | 12.4 |
| 24 | 3F24 | b | 180 | 0.046 | 0.18 | 1.46 | 3.25 | 0.45 | 0.40 | 0.060 | 0.0034 | 0.050 | 0.0057 | - | 0.01 | - | - | - | 10.4 |
| 25 | 3F25 | b | 140 | 0.048 | 0.15 | 1.50 | 0.98 | 0.75 | 0.42 | 0.065 | 0.0035 | 0.051 | 0.0054 | - | 0.01 | - | - | - | 10.5 |
| 26 | 3F26 | a | 160 | 0.060 | 0.30 | 2.00 | 0.99 | 0.20 | 0.90 | 0.061 | 0.0008 | 0.052 | 0.0047 | - | - | - | - | - | 16.0 |
| 27 | 3F27 | b | 160 | 0.049 | 0.17 | 1.45 | 0.90 | 0.22 | 0.30 | 0.094 | 0.0033 | 0.049 | 0.0055 | - | 0.01 | - | - | - | 8.4 |
| 28 | 3F28 | b | 160 | 0.060 | 0.32 | 1.54 | 1.21 | 0.11 | 0.38 | 0.062 | 0.0053 | 0.049 | 0.0054 | - | - | - | - | - | 7.4 |
| 29 | 3F29 | a | 140 | 0.050 | 0.38 | 1.50 | 0.98 | 0.29 | 0.56 | 0.072 | 0.0032 | 0.103 | 0.0047 | - | - | 1.1 | - | - | 12.6 |
| 30 | 3F30 | c | 160 | 0.050 | 0.22 | 1.47 | 0.86 | 0.21 | 0.46 | 0.081 | 0.0033 | 0.028 | 0.0156 | - | - | - | - | - | 10.8 |
| 31 | 3F31 | b | 140 | 0.065 | 0.18 | 1.48 | 0.95 | 0.35 | 0.45 | 0.065 | 0.0035 | 0.048 | 0.0058 | 0.01 | - | - | - | - | 8.1 |
| 32 | 3F1 | b | 190 | 0.045 | 0.15 | 1.40 | 0.98 | 0.40 | 0.38 | 0.060 | 0.0038 | 0.045 | 0.0047 | - | 0.01 | - | - | - | 10.2 |

Table 2 continued

| Test No. | SR conditions | | Carbides | | Measurement results | | |
|---|---|---|---|---|---|---|---|
| | Temperature [°C] | Period [hr] | Equivalent circular diameter [μm] | | TS [MPa] | vE₋₄₀ [J] | vE₋₆₀ [J] |
| | | | Grain boundary | In grain | | | |
| 1 | 620 | 8 | 0.55 | 0.25 | 689 | 85 | 60 |
| 2 | 620 | 8 | 0.60 | 0.22 | 793 | 65 | 50 |
| 3 | 620 | 8 | 0.64 | 0.20 | 755 | 72 | 53 |
| 4 | 620 | 8 | 0.65 | 0.15 | 767 | 76 | 45 |
| 5 | 620 | 8 | 0.70 | 0.21 | 698 | 88 | 55 |
| 6 | 620 | 8 | 0.55 | 0.22 | 652 | 90 | 60 |
| 7 | 620 | 8 | 0.54 | 0.16 | 713 | 73 | 58 |
| 8 | 620 | 8 | 0.53 | 0.24 | 709 | 74 | 55 |
| 9 | 620 | 8 | 0.56 | 0.13 | 687 | 81 | 61 |
| 10 | 620 | 8 | 0.62 | 0.15 | 654 | 84 | 65 |
| 11 | 620 | 8 | 0.60 | 0.25 | 654 | 90 | 65 |
| 12 | 620 | 8 | 0.55 | 0.26 | 682 | 88 | 62 |
| 13 | 620 | 8 | 0.70 | 0.28 | 690 | 78 | 59 |
| 14 | 620 | 8 | 0.65 | 0.25 | 677 | 80 | 63 |
| 15 | 620 | 8 | 0.60 | 0.20 | 671 | 89 | 60 |
| 16 | 620 | 8 | 0.62 | 0.23 | 665 | 91 | 59 |

Table 2 continued

| Test No. | SR conditions | | Carbides | | Measurement results | | |
|---|---|---|---|---|---|---|---|
| | Temperature [°C] | Period [hr] | Equivalent circular diameter [μm] | | TS [MPa] | vE$_{-40}$ [J] | vE$_{-60}$ [J] |
| | | | Grain boundary | In grain | | | |
| 17 | 620 | 8 | 0.64 | 0.18 | 664 | 80 | 58 |
| 18 | 620 | 8 | 0.63 | 0.18 | 656 | 79 | 57 |
| 19 | 620 | 8 | 0.58 | 0.19 | 673 | 80 | 62 |
| 20 | 620 | 8 | 0.58 | 0.18 | 679 | 80 | 60 |
| 21 | 620 | 8 | 0.78 | 0.05 | 791 | 65 | 25 |
| 22 | 620 | 8 | 0.51 | 0.19 | 655 | 80 | 35 |
| 23 | 650 | 5 | 0.60 | 0.25 | 624 | 65 | 38 |
| 24 | 620 | 8 | 0.55 | 0.20 | 842 | 50 | 25 |
| 25 | 620 | 8 | 0.58 | 0.20 | 790 | 45 | 22 |
| 26 | 650 | 5 | 0.57 | 0.08 | 613 | 43 | 25 |
| 27 | 620 | 8 | 0.62 | 0.09 | 646 | 45 | 30 |
| 28 | 680 | 2 | 0.68 | 0.05 | 752 | 50 | 35 |
| 29 | 650 | 5 | 0.51 | 0.24 | 736 | 52 | 5 |
| 30 | 650 | 5 | 0.57 | 0.22 | 737 | 34 | 12 |
| 31 | 620 | 8 | 0.62 | 0.05 | 733 | 65 | 30 |
| 32 | 620 | 8 | 0.76 | 0.16 | 677 | 55 | 28 |

<Measurement Results>

It can be seen from Table 2 that the weld metals No. 1 to No. 20, which satisfied the component content ranges in the present invention and in which the carbides present in the grains and at the grain boundaries had forms satisfying the requirements in the present invention, each had a tensile strength TS exceeding 620 MPa and an absorption energy at -60°C vE$_{-60}$ exceeding 40 J and were able to have both strength and low-temperature toughness on a high level after SR annealing. It can also be seen that these weld metals each had an absorption energy at -40°C vE$_{-40}$ exceeding 60 J, showing that sufficiently high toughness was obtained even at a temperature range including -40°C.

In contrast, the cases No. 21 to No. 30, in which any of the components did not satisfy the component ranges in the present invention, each had an absorption energy at -60°C vE$_{-60}$ of 40 J or less. It can hence be seen that sufficient toughness at low temperatures was not obtained.

The weld metal No. 31 had an absorption energy at -60°C vE$_{-60}$ of 40 J or less and was unable to have sufficient low-temperature toughness. This is thought to be because the average equivalent circular diameter of carbides each having an equivalent circular diameter of less than 0.40 μm was as small as 0.05 μm.

The weld metal No. 32 had an absorption energy at -60°C vE$_{-60}$ of 40 J or less and was unable to have sufficient low-temperature toughness. This is thought to be because the average equivalent circular diameter of grain-boundary carbides each having an equivalent circular diameter of 0.40 μm or more exceeded 0.75 μm. The reason why the grain-boundary carbides had an increased average equivalent circular diameter in No. 32 is thought to be because the preheating temperature and the interpass temperature had been so high that carbides had been formed during the cooling and grown during the SR annealing.

While the present invention has been described in detail and with reference to specific embodiments thereof, it will be apparent to one skilled in the art that various changes and modifications can be made therein without departing from the spirit and scope thereof.

This application is based on Japanese patent application No. 2015-115277 filed on June 5, 2015 and Japanese patent application No. 2016-023186 filed on February 9, 2016, the contents of which are incorporated herein by reference.

Industrial Applicability

As described above, the weld metal and the welded structure may be produced by gas-shielded arc welding using a flux-cored wire, and have high strength and high toughness at -60°C or less. The weld metal and the welded structure are hence suitable for use in or as, for example, marine structures constructed for submarine oil-field drilling and oil production in cold districts.

Description of the Reference Numerals and Signs

1 to 11: Carbide
A1 to A8: Straight line
B: Complete circle with diameter of 0.40 $\mu$m
C: Carbide having equivalent circular diameter of 0.40 $\mu$m or more
D: Carbide having equivalent circular diameter of less than 0.40 $\mu$m

**Claims**

1.  A weld metal having a composition comprising:

    C: 0.02 mass% or more and 0.08 mass% or less;
    Si: 0.10 mass% or more and 0.30 mass% or less;
    Mn: 1.20 mass% or more and 2.0 mass% or less;
    Ni: 0.50 mass% or more and 3.00 mass% or less;
    Cr: 0 mass% or more and 0.70 mass% or less;
    Mo: 0.10 mass% or more and 0.70 mass% or less;
    Ti: 0.04 mass% or more and 0.08 mass% or less;
    B: 0.0010 mass% or more and 0.0050 mass% or less;
    O: 0.030 mass% or more and 0.100 mass% or less;
    N: more than 0 mass% and 0.015 mass% or less;
    Nb+V: 0.008 mass% or more and 0.05 mass% or less; and
    remainder: Fe and unavoidable impurities,
    wherein an average equivalent circular diameter of carbides each having an equivalent circular diameter of less than 0.40 $\mu$m is 0.10 $\mu$m or more, and an average equivalent circular diameter of carbides present at grain boundaries and each having an equivalent circular diameter of 0.40 $\mu$m or more is 0.75 $\mu$m or less.

2.  The weld metal according to claim 1, further comprising at least one component selected from the group consisting of:

    Cu: more than 0 mass% and 1.0 mass% or less;
    Co: more than 0 mass% and 1.0 mass% or less; and
    Al: more than 0 mass% and 0.030 mass% or less.

3.  A welded structure including the weld metal according to claim 1 or 2.

FIG. 1

FIG. 2A

FIG. 2B

FIG. 2C

FIG. 3

FIG. 4

## INTERNATIONAL SEARCH REPORT

| | International application No. |
|---|---|
| | PCT/JP2016/066442 |

| A. CLASSIFICATION OF SUBJECT MATTER |
|---|
| *B23K35/30*(2006.01)i, *B23K35/368*(2006.01)n |

According to International Patent Classification (IPC) or to both national classification and IPC

| B. FIELDS SEARCHED |
|---|
| Minimum documentation searched (classification system followed by classification symbols) |
| B23K35/30, B23K35/368 |

| Documentation searched other than minimum documentation to the extent that such documents are included in the fields searched |
|---|
| Jitsuyo Shinan Koho        1922–1996   Jitsuyo Shinan Toroku Koho   1996–2016 |
| Kokai Jitsuyo Shinan Koho  1971–2016   Toroku Jitsuyo Shinan Koho   1994–2016 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2014-195832 A  (Kobe Steel, Ltd.), 16 October 2014 (16.10.2014), & US 2016/0008931 A1    & WO 2014/136601 A1 & EP 2965857 A1          & CA 2900744 A1 & KR 10-2015-0114561 A   & CN 105026100 A | 1-3 |
| A | JP 2008-68274 A  (Kobe Steel, Ltd.), 27 March 2008 (27.03.2008), (Family: none) | 1-3 |
| A | WO 2014/104731 A1  (POSCO), 03 July 2014 (03.07.2014), & JP 2016-508877 A       & US 2015/0314397 A1 & DE 112013006287 T5     & KR 10-2014-0084654 A & CN 104903046 A | 1-3 |

☐ Further documents are listed in the continuation of Box C.  ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 August 2016 (15.08.16) | 30 August 2016 (30.08.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006239733 A
- JP H09253886 A
- JP 2014195832 A
- JP 2015115277 A
- JP 2016023186 A